# EUROPÄISCHE PATENTSCHRIFT

(11) **EP 2 333 493 B1**
(45) Veröffentlichungstag und Bekanntmachung des Hinweises auf die Patenterteilung: **16.03.2016**
(21) Anmeldenummer: 10193264.8
(22) Anmeldetag: 01.12.2010
(51) Int. Cl.: G01D 5/347, G01D 5/38

(54) **Positionsmesseinrichtung**
Position measuring device
Dispositif de mesure de position

(30) Priorität: 14.12.2009 DE 102009054592
(43) Veröffentlichungstag der Anmeldung: 15.06.2011
(73) Patentinhaber: Dr. Johannes Heidenhain GmbH, 83301 Traunreut (DE)
(72) Erfinder: Meissner, Markus, 83236 Übersee (DE)

(56) Entgegenhaltungen:
- JP-A- 2007 114 141
- US-B1- 6 418 251
- US-B1- 6 580 734
- BELOVOLOV M.I. ET AL: "Coherent properties of FBG-based external cavity diode lasers", LASERS FOR MEASUREMENTS AND INFORMATION TRANSFER, Bd. 5381, 2004, Seiten 20-25, XP040183022, Bellingham, WA 98227-0010 USA

## Beschreibung

Die vorliegende Erfindung betrifft eine Positionsmesseinrichtung.

In Einrichtungen zur Fertigung von Halbleiter-Bauelementen ist es erforderlich die räumliche Position bestimmter Teile, die zueinander beweglich sind, präzise mittels geeigneter Positionsmesseinrichtungen zu bestimmen. Über die ermittelten Positionsinformationen ist dann eine rechnergesteuerte Ablaufsteuerung in diesen Einrichtungen möglich. Bisher erfolgte die hierzu nötige Positionsmessung vorwiegend über mehrere Laserinterferometer. Zukünftig ist davon auszugehen, dass die Genauigkeitsanforderungen an die Positionsmessung bei gleichzeitig steigenden Verfahrgeschwindigkeiten der verschiedenen Teile weiter ansteigen. Bei den dann resultierenden hohen Genauigkeitsforderungen können keine Laserinterferometer als Positionsmesseinrichtungen mehr verwendet werden. Die Brechungsindexschwankungen in der umgebenden Luft führen auch bei optimaler Luftkonditionierung zu inakzeptablen Messwertschwankungen bei der Positionsbestimmung, die in der Größenordnung von einigen Nanometern (nm) liegen.

Aus diesem Grund wurden bereits alternative Positionsmesseinrichtungen für derartige Einrichtungen vorgeschlagen. So ist etwa aus der EP 1 019 669 B1 bekannt, optische Positionsmesseinrichtungen mit sog. Kreuzgittern als zweidimensionale Maßverkörperung einzusetzen. Derartige Positionsmesseinrichtungen seien nachfolgend auch als gitterbasierte Positionsmesseinrichtungen bezeichnet. Diese Systeme werden kaum von eventuellen Brechungsindexschwankungen der Luft beeinflusst und erlauben daher gut reproduzierbare Positionsmessungen.

Optische Positionsmesseinrichtungen mit Gittern als Maßverkörperungen, die die nötigen Auflösungen im Nanometer-Bereich liefern, basieren üblicherweise auf interferentiellen Abtastprinzipien. Hierbei wird in der Regel ein Lichtstrahl einer geeigneten Lichtquelle in mindestens zwei kohärente Teilstrahlenbündel aufgespalten, die nachfolgend mehrere Gitter in den jeweiligen Teilstrahlengängen beaufschlagen, bevor sie wiedervereinigt und zur Interferenz gebracht werden. Die letztlich interessierende Positionsinformation ist durch die (verschiebungsabhängige) Phasenlage der beiden interferierenden Teilstrahlenbündel gegeben. Der resultierende Weglängenunterschied ist für die beiden Teilstrahlenbündel zwischen Aufspaltung und Wiedervereinigung in symmetrischen TeilstrahlengangVarianten derartiger Systeme üblicherweise annähernd Null. Es ist daher eine geringe Kohärenzlänge des verwendeten Lichts ausreichend, um detektionsseitig die gewünschte Interferenz zu gewährleisten.

In der DE 10 2005 043 569 A1 wird eine weitere interferentielle Positionsmesseinrichtung vorgeschlagen, die vorzugsweise asymmetrische Teilstrahlengänge für die beiden Teilstrahlenbündel aufweist. Das heißt, dass aufgrund dieser Asymmetrie Weglängenunterschiede für die zur Interferenz gelangenden Teilstrahlenbündel in der Größenordnung bis zu einigen Millimetern (mm) resultieren. In Bezug auf die erforderliche Kohärenzlänge des verwendeten Lichts bedeutet dies, dass die Kohärenzlänge im Bereich von einigen Millimetern (mm) bis hin zu einigen Zentimetern (cm) liegen muss, andernfalls ist keine Interferenz der zur Überlagerung kommenden Teilstrahlenbündel möglich.Eine Lichtquelle, die den oben diskutierten Anforderungen in einer hochpräzisen Positionsmesseinrichtung grundsätzlich genügt, ist aus der DE 10 2006 041 357 A1 der Anmelderin bekannt. Diese ist als Halbleiterlaser mit einer großen Kohärenzlänge im Bereich zwischen 1 mm und 1 cm ausgebildet, der gepulst in einem Single-Mode-Betrieb arbeitet. Als geeignete Halbleiterlaser kommen etwa sogenannte DFB-Halbleiterlaser oder aber DBR-Halbleiterlaser in Betracht. Die in dieser Druckschrift vorgeschlagenen Lichtquellen erfüllen grundsätzlich die Anforderungen hinsichtlich der Kohärenzlänge, erfordern jedoch einen gewissen technischen Aufwand, insbesondere wenn hohe optische Leistungen benötigt werden.

Aus der JP 2007-114141 A ist eine interferometrische Positionsmesseinrichtung bekannt, die eine Lichtquelle nutzt, welche als Halbleiterlaser mit Fasergitter-Rückkopplungsmitteln ausgebildet ist. In Bezug auf unerwünschte Modenwechsel und eine hohe Wellenlängenstabilität der Lichtquelle enthält diese Druckschrift jedoch keine weiteren Hinweise.

Die US 6,580,734 B1 offenbart eine Möglichkeit zur Stabilisierung der Wellenlänge einer Laser-Anordnung, die eine Mehrzahl optischer Elemente umfasst, welche derart zueinander angeordnet sind, dass eine Laser-Kavität mit einer einzigen Resonator-Mode ausgebildet wird. Zur Stabilisierung wird die Ausgangsstrahlung des Lasers detektiert und über ein Steuersignal auf die optische Länger der Laser-Kavität eingewirkt, so dass die Laser-Kavität bei der Ausgangs-Wellenlänge in einem single-mode-Betrieb arbeitet.

Aufgabe der vorliegenden Erfindung ist es , eine Positionsmesseinrichtung für hochpräzise Positionsmessungen anzugeben, wobei eine möglichst einfache Lichtquelle zum Einsatz kommt, die einen gepulsten Betrieb erlaubt.

Diese Aufgabe wird erfindungsgemäß durch eine Positionsmesseinrichtung gemäß Anspruch 1 gelöst.

Vorteilhafte Ausgestaltungsmöglichkeiten der erfindungsgemäßen Positionsmesseinrichtung ergeben sich aus den Maßnahmen in den abhängigen Ansprüchen.

Die erfindungsgemäße Positionsmesseinrichtung zur Erfassung der Position zweier Objekte, die in mindestens einer Messrichtung zueinander beweglich angeordnet sind, umfasst eine Lichtquelle sowie Aufspaltmittel, über die eine Aufspaltung eines von der Lichtquelle gelieferten Lichtstrahls in zwei oder mehr Teilstrahlenbündel erfolgt. Die Teilstrahlenbündel durchlaufen mindestens zwei Teilstrahlengänge. Auf mehreren optoelektronischen Detektorelementen treffen interferierende Teilstrahlenbündel aus den Teilstrahlengängen auf, so dass über die Detektorelemente verschiebungsabhängige Positionssignale erfassbar sind. Die Lichtquelle ist als Halbleiterlaser mit Fasergitter-Rückkopplungsmitteln ausgebildet.

In einer möglichen Ausführungsform ist der Halbleiterlaser als Fabry-Perot-Laser ausgebildet.

Die Fasergitter-Rückkopplungsmittel können folgende Komponenten umfassen:
- eine, der auskoppelseitigen Front-Facette des Halbleiter-Lasers vorgeordnete Einkoppeloptik,
- einen der Einkoppeloptik nachgeordneten Lichtwellenleiter,
- ein im Lichtwellenleiter integriertes Reflexions-Bragg-Gitter.

Die Fasergitter-Rückkopplungsmittel sind hinsichtlich ihrer wellenlängenmäßigen Reflexionscharakteristik auf den Modenabstand des Halbleiterlasers abgestimmt.

Hierbei wird vorzugsweise Strahlung von den Fasergitter-Rückkopplungsmitteln in den Halbleiterlaser zurückreflektiert, die in einem Wellenlängenbereich liegt, der kleiner gewählt ist als der Abstand benachbarter Moden des Halbleiterlasers.

Der Halbleiterlaser und die Fasergitter-Rückkopplungsmittel sind zumindest teilweise mit Temperatur-Einstellmitteln gekoppelt, über die die Abstimmung der Reflexionscharakteristik der Fasergitter-Rückkopplungsmittel auf die Lage der Moden des Halbleiterlasers erfolgt.

Mit Vorteil sind der Halbleiterlaser und die Fasergitter-Rückkopplungsmittel zumindest teilweise mit Temperatur-Einstellmitteln gekoppelt, über die der Halbleiterlaser und die Fasergitter-Rückkopplungsmittel bei Temperaturen betreibbar sind, in denen das Phasenrauschen der verschiebungsabhängigen Positionssignale minimiert ist.

Beispielsweise umfassen die Temperatur-Einstellmittel ein Temperier-Element sowie eine Temperatur-Regelungseinrichtung umfassen. Vorzugsweise ist der Lichtwellenleiter als Single-Mode-Lichtwellenleiter ausgebildet.

Der Halbleiterlaser kann eine Kohärenzlänge im Bereich von von 8-12mm aufweisen.

Der Halbleiterlaser kann hierbei Lichtpulse mit Pulsdauern im Bereich von 20ns bis 200ns liefern.

Die Teil-Strahlengänge sind asymmetrisch mit unterschiedlichen optischen Weglängen ausgebildet, die von Teilstrahlenbündeln durchlaufen werden, bevor die Teilstrahlenbündel überlagert zur Interferenz kommen.

Hierbei kann eine relativ zu einer Maßverkörperung beweglichen Abtasteinheit vorgesehen werden, wobei die Lichtquelle entfernt von der Abtasteinheit angeordnet ist und die Lichtquelle mittels eines Lichtwellenleiters mit der Abtasteinheit verbunden ist.

Aufgrund der nunmehr vorgesehenen Lichtquelle ergeben sich eine Reihe von Vorteilen für die erfindungsgemäße Positionsmesseinrichtung.

So stehen besonders große Kohärenzlängen bis über einen Zentimeter bei gleichzeitig hoher Leistung der Lichtquelle zur Verfügung. Dies hat vorteilhafte Konsequenzen für das interferentielle Abtastprinzip der erfindungsgemäßen Positionsmesseinrichtung, da jetzt deutlich größere Gangunterschiede für die zur Interferenz kommenden Teilstrahlenbündel möglich sind. So können die zulässigen Gangunterschiede im Bereich weniger Millimeter bis hin zu einem Zentimeter liegen. Dies erlaubt insbesondere die Ausbildung von Positionsmesseinrichtungen mit stark asymmetrischen Teilstrahlengängen, bei denen das Licht in den verschiedenen Teilstrahlengängen deutlich unterschiedliche optische Weglängen zurücklegt. Vorteilhaft wirkt sich ein größerer akzeptabler Wegunterschied in den Teilstrahlengängen auch hinsichtlich von Verkippungstoleranzen aus. So sind für erfindungsgemäß ausgebildete Positionsmesseinrichtungen deutlich größere Verkippungstoleranzen zulässig, als dies bislang der Fall war.

Als weiterer Vorteil ist anzuführen, dass eine hohe Wellenlängenstabilität der Lichtquelle mit lediglich geringem Aufwand für eine Temperaturstabilisierung resultiert. Somit können auch Positionsmesseinrichtungen mit stark wellenlängen-abhängigen Abtastprinzipien über längere Zeiträume stabil betrieben werden.

Desweiteren ist aufgrund des gepulsten Betriebs der Lichtquelle bei gleichzeitig hoher Leistung gewährleistet, dass Messungenauigkeiten vermeidbar sind, die etwa durch einen sog. Einspeicherjitter hervorgerufen werden.können. Hierunter ist die Ungenauigkeit zu verstehen, die aufgrund der Zeit zwischen der Messung und der Ausgabe des eigentlichen Positionsmesswerts resultiert. Im Zusammenhang mit dem gepulsten Betrieb der erfindungsgemäßen Positionsmesseinrichtung wird ausdrücklich auf die EP 1 334 332 B2 der Anmelderin verwiesen.

Weitere Vorteile sowie Einzelheiten der vorliegenden Erfindung ergeben sich aus der nachfolgenden Beschreibung von Ausführungsbeispielen anhand der beiliegenden Figuren.

Es zeigt:
- Figur 1: eine schematisierte Darstellung zur Erläuterung eines ersten Ausführungsbeispiels einer erfindungsgemäßen Positionsmesseinrichtung bzw. des erfindungsgemäßen Verfahrens;
- Figur 2: eine schematisierte Darstellung eines zweiten Ausführungsbeispiels einer erfindungsgemäßen Positionsmesseinrichtung;
- Figur 3: eine stark schematisierte Darstellung einer geeigneten Lichtquelle für die erfindungsgemäße Positionsmesseinrichtung;
- Figur 4: eine schematische Darstellung des Modenprofils des Fabry-Perot-Lasers und der Reflexionscharakteristik des Reflexions-Bragg-Gitters der Lichtquelle aus Figur 3.

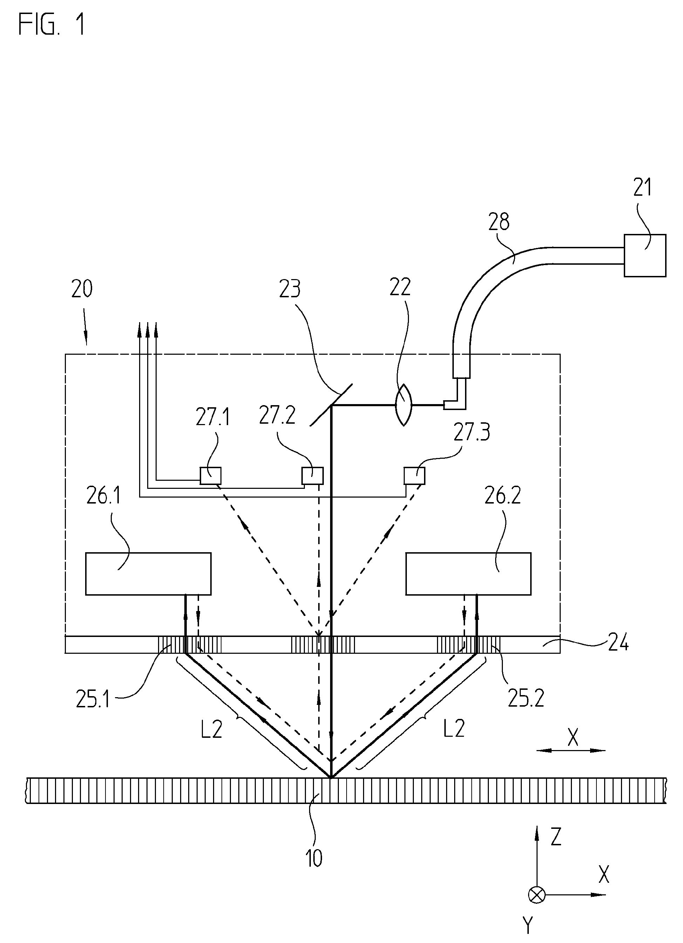

Eine schematisierte Darstellung eines ersten Ausführungsbeispiels einer erfindungsgemäßen Positionsmesseinrichtung ist in Figur 1 gezeigt, wobei diese eine als Gitter ausgebildete Maßverkörperung besitzt. Das dargestellte erste Ausführungsbeispiel ist demzufolge als gitterbasierte Positionsmesseinrichtung ausgebildet.

Die dargestellte Positionsmesseinrichtung umfasst neben der Maßverkörperung 10 eine mindestens relativ in Messrichtung x bewegliche Abtasteinheit 20 sowie eine entfernt von der Abtasteinheit 20 angeordnete Lichtquelle 21. Die Maßverkörperung 10 und die Abtasteinheit 20 sind mit zwei - nicht dargestellten - Objekten verbunden, deren Position zueinander erfasst werden soll. Beispielsweise handelt es sich hierbei wie eingangs erläutert um relativ zueinander bewegliche Komponenten einer Einrichtung zur Fertigung von Halbleiter-Bauelementen.
Die Maßverkörperung 10 ist im vorliegenden Beispiel als lineare Reflexions-Maßverkörperung ausgebildet und besteht aus alternierend in Messrichtung x angeordneten Bereichen unterschiedlicher Reflektivität.

Die abtastseitigen Elemente zur Erzeugung verschiebungsabhängiger Positionssignale seien nachfolgend auch als Abtastmittel bezeichnet. Neben der Lichtquelle 21 umfassen diese noch verschiedene weitere optische und/oder opto-elektronische Bauelemente. Diese Bauelemente können z.B. in der Abtasteinheit 20 angeordnet sein und/oder aber in einer geeigneten Wirkverbindung mit derselben stehen, z.B. über geeignete Lichtwellenleiter etc.. Zur Erläuterung der Funktionalität der Abtastmittel sei nachfolgend der Abtaststrahlengang des dargestellten Ausführungsbeispiels in Figur 1 nachvollzogen. Bereits an dieser Stelle sei darauf hingewiesen, dass selbstverständlich auch alternative Abtaststrahlengänge im Rahmen der vorliegenden Erfindung realisierbar sind.

Im Beispiel der Figur 1 werden die in Form von Lichtpulsen von der Lichtquelle 21 emittierten Strahlenbündel über einen Lichtwellenleiter 28 der Abtasteinheit 20 zugeführt. In Bezug auf Details besonders geeigneter Lichtquellen sei auf die nachfolgende Beschreibung verwiesen. Über eine Auskoppellinse 22 gelangen die Lichtpulse bzw. Strahlenbündel auf einen Umlenkspiegel 23, der diese in Richtung der Maßverkörperung 10 umlenkt. Durch einen transparenten Bereich einer Abtastplatte 24 an der Unterseite der Abtasteinheit 20 propagieren die Strahlenbündel dann in Richtung Maßverkörperung 10. Dort werden sie beim erstmaligen Auftreffen in zwei Teilstrahlenbündel +1 und -1. Ordnung gebeugt bzw. aufgespalten und in Richtung Abtasteinheit 20 zurückreflektiert. Im vorliegenden Ausführungsbeispiel fungiert somit die Maßverkörperung 10 als Aufspaltmittel, über das eine Aufspaltung des von der Lichtquelle 21 gelieferten Lichtstrahls in zwei oder mehr Teilstrahlenbündel erfolgt. Die aufgespaltenen Teilstrahlenbündel durchtreten dann in ihren Teilstrahlengängen jeweils erste Abtastgitter 25.1, 25.2 in der Abtastplatte 24 und werden über nachgeordnete Retroreflexionselemente 26.1, 26.2 wieder in Richtung Maßverkörperung 10 zurück umgelenkt; die umgelenkten Teilstrahlenbündel sind in der Figur strichliniert dargestellt. Als Retroreflexionselemente 26.1, 26.2 fungieren beispielsweise geeignete Prismen, Umlenkspiegelkombinationen oder dgl.. Nach dem nochmaligen Durchtreten von - in Figur 1 nicht dargestellten - zweiten Abtastgittern in der Abtastplatte 24 und der dabei resultierenden Richtungs-Ablenkung treffen die Teilstrahlenbündel ein zweites Mal auf die Maßverkörperung 10 auf; es sei darauf hingewiesen, dass die Darstellung der zurückgelenkten Teilstrahlenbündel in Figur 1 lediglich schematisch angedeutet ist, d.h. insbesondere das nochmalige Auftreffen auf der Maßverkörperung 10 ist nicht vollkommen korrekt dargestellt. Auf der Maßverkörperung 10 werden die Teilstrahlenbündel erneut derart gebeugt, dass ein Paar paralleler Teilstrahlenbündel in Richtung der Abtasteinheit 20 propagiert. In der Abtasteinheit 20 treffen die Teilstrahlenbündel auf ein weiteres Abtastgitter 25.3 auf der Abtastplatte 24, wo eine Aufspaltung in drei Paare interferierender Teilstrahlenbündel in drei Raumrichtungen erfolgt. In den entsprechenden Raumrichtungen sind drei Detektorelemente 27.1, 27.2, 27.3 in der Abtasteinheit 20 angeordnet, auf denen die interferierenden Teilstrahlenbündel aus den Teilstrahlengängen auftreffen, so dass über die Detektorelemente 27.1, 27.2, 27.3 verschiebungsabhängige Positionssignale erfassbar sind. An den Detektorelementen 27.1, 27.2, 27.3 liegen hierbei phasenverschobene Positionssignale an; typischerweise beträgt der Phasenversatz hierbei 120°.

Alternativ zur dargestellten Anordnung der Detektorelemente 27.1 - 27.3 in der Abtasteinheit 10 ist es möglich, diese ähnlich wie die Lichtquelle 21 räumlich getrennt von derselben anzuordnen und die zu detektierenden Teilstrahlenbündel den Detektorelementen über Lichtwellenleiter zuzuführen. Ebenso kann alternativ zur erläuterten Variante vorgesehen werden, eine andere Anzahl von phasenverschobenen Positionssignalen zu erzeugen, beispielsweise zwei oder vier um jeweils 90° phasenverschobene Positionssignale.

Im vorliegenden Ausführungsbeispiel der erfindungsgemäßen Positionsmesseinrichtung durchlaufen die Teilstrahlenbündel zwischen der ersten und zweiten Reflexion auf der Maßverkörperung 10 in den jeweiligen Teilstrahlengängen nunmehr deutlich unterschiedliche optische Weglängen L1 und L2, d.h. L1 ≠ L2; dies ist lediglich grob schematisiert in Figur 1 angedeutet. Es liegen somit asymmetrische Teilstrahlengänge mit deutlich unterschiedlichen optischen Weglängen für die dann zur Interferenz gelangenden Teilstrahlenbündel vor. Aufgrund dieser Asymmetrie resultieren die oben diskutierten Anforderungen hinsichtlich einer großen Kohärenzlänge der eingesetzten Lichtquelle 21, wenn detektionsseitig ein Interferenzsignal zur Positionsbestimmung ausgewertet werden soll.

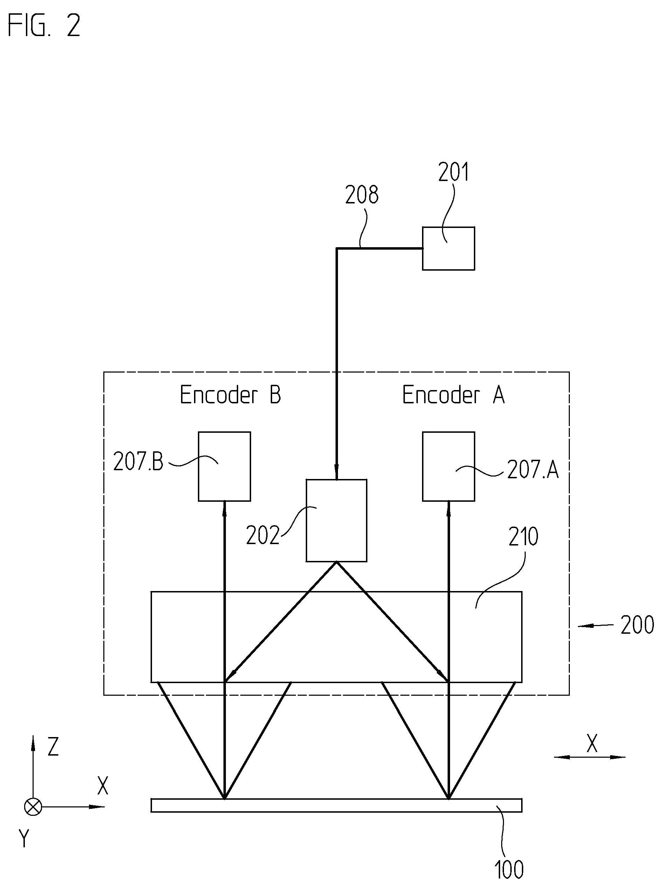

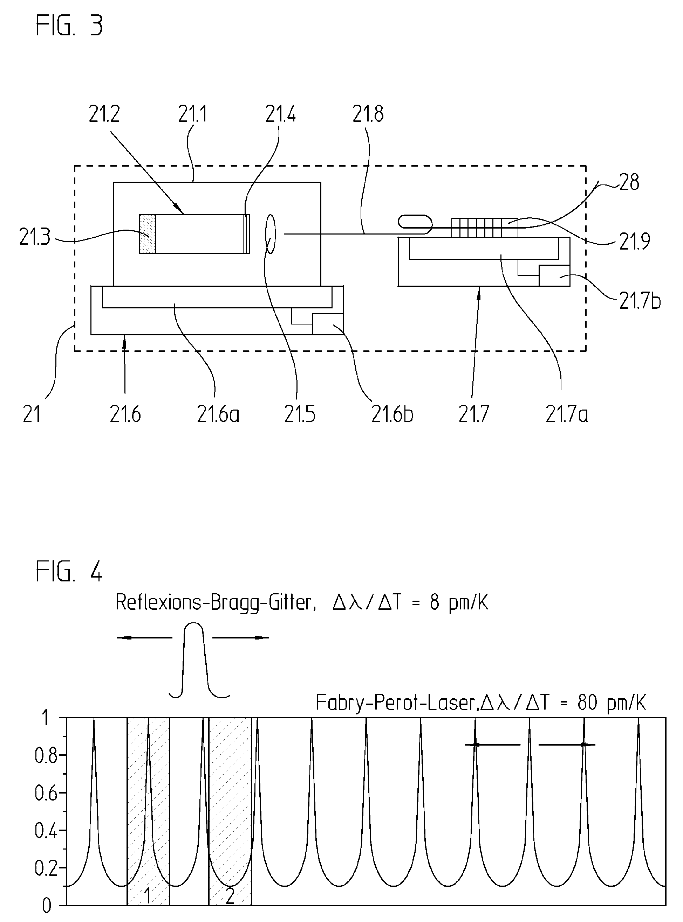

Bevor anhand der Figuren 3 und 4 im Detail auf die Lichtquelle der erfindungsgemäßen Positionsmesseinrichtung eingegangen wird, sei anhand von Figur 2 eine zweite Ausführungsform einer erfindungsgemäßen Positionsmesseinrichtung erläutert. Figur 2 stellt wiederum nur eine stark schematisierte Darstellung der entsprechenden Positionsmesseinrichtung dar. Auch das in Figur 2 dargestellte Ausführungsbeispiel ist als gitterbasierte Positionsmesseinrichtung mit einer Maßverkörperung ausgebildet.

Gezeigt ist in Figur 2 wiederum eine Abtasteinheit 200, die gegenüber der Maßverkörperung 100 in mindestens einer Messrichtung X beweglich angeordnet ist; die von einer Lichtquelle 201 emittierten Lichtpulse werden der Abtasteinheit 200 wiederum über einen Lichtwellenleiter 208 zugeführt.

Die dargestellte zweite Ausführungsform der Positionsmesseinrichtung gestattet im Unterschied zur Variante aus Figur 1 nunmehr nicht nur die Erfassung der Relativbewegung in der angegebenen Messrichtung x, sondern zudem auch eine gleichzeitige Positionsbestimmung in der hierzu senkrechten Richtung z. Es lässt sich demzufolge darüber der Abstand zwischen Maßverkörperung 100 und Abtasteinheit 200 bestimmen.

Zu diesem Zweck umfasst die Abtasteinheit 200 wie in Figur 2 schematisiert angedeutet, zwei derartige Abtaststrahlengänge, wie sie in der Variante gemäß Figur 1 erläutert wurde. In Figur 2 sind die beiden Abtaststrahlengänge mit den Bezeichnungen ENCODER A und ENCODER B versehen. Jeder der beiden Abtaststrahlengänge ist demzufolge prinzipiell ausgebildet wie der Abtaststrahlengang aus dem Beispiel in Figur 1. Insbesondere gilt in Bezug auf die zurückgelegten optischen Weglängen L1, L2 in den aufgespaltenen Teilstrahlengängen, dass diese jeweils deutlich unterschiedlich sind, d.h. wiederum L1 < L2.

Der eingangsseitig gelieferte Lichtpuls einer separat von der Abtasteinheit 200 angeordneten Lichtquelle 201 wird über einen Lichtwellenleiter 208 der Abtasteinheit 200 zugeführt und über eine Aufspaltoptik 202 auf die beiden Abtaststrahlengänge aufgeteilt; auf die Darstellung von Details in den beiden Abtaststrahlengängen wurde aus Gründen der Übersichtlichkeit verzichtet. Die zu den Abtastmitteln zählenden optischen Bauteile sind in Figur 2 in der Abtasteinheit 200 i.w. schematisiert als Block 210 angedeutet. Ebenfalls nur als schematisierte Blöcke angedeutet sind die auch zu den Abtastmitteln zu zählenden optoelektronischen Detektorelemente 207.A, 207.B. Die über diese Detektorelemente 207.A, 207.B erfassten Positionssignale werden dann zur Weiterverarbeitung einer - nicht dargestellten - Auswerteeinheit zugeführt.

In Bezug auf Details der Abtaststrahlengänge sei an dieser Stelle auch ausdrücklich auf die DE 10 2005 043 569 A1 der Anmelderin verwiesen.

Auch in der zweiten Ausführungsform der erfindungsgemäßen Positionsmesseinrichtung wird eine speziell gewählte Lichtquelle eingesetzt, die besondere Vorteile für Hochpräzisionsmessungen bietet und wie sie nachfolgend anhand der Figuren 3 und 4 im Detail erläutert wird.

Die beiden bislang erläuterten Ausführungsbeispiele erfindungsgemäßer Positionsmesseinrichtungen umfassten jeweils Gitter als körperlich ausgebildete Maßverkörperungen, die im Abtaststrahlengang angeordnet sind. Die Erzeugung der verschiebungsabhängigen Positionssignale basiert jeweils auf interferentiellen Abtastprinzipien. Hierbei wird der von der Lichtquelle gelieferte Lichtstrahl über Aufspaltmittel in mindestens zwei Teilstrahlenbündel aufgespalten, die in ihren Teilstrahlengängen nachfolgend ein oder mehrere Gitter beaufschlagen, bevor sie wiedervereinigt und zur Interferenz gebracht werden. Die interessierende Positionsinformation ist durch die verschiebungsabhängige Phasenlage der interferierenden Teilstrahlenbündel gegeben.

Im Ausführungsbeispiel der Figuren 3 und 4 ist vorgesehen, in der erfindungsgemäßen Positionsmesseinrichtung als Lichtquelle 21 einen Halbleiterlaser mit Fasergitter-Rückkopplungsmitteln einzusetzen. Die Lichtquelle 21 arbeitet gepulst in einem Single-Mode-Betrieb und liefert Strahlung mit einer großen Kohärenzlänge. Es lassen sich Pulsdauern zwischen 20nsec und 200 nsec mit Pulsleistungen größer als 300mW und Kohärenzlängen von mehr als 12mm erzielen. Typische Werte für die Kohärenzlänge der Lichtquelle 21 liegen um 10mm bei ca. 500mW Pulsleistung; bevorzugterweise weist der Halbleiterlaser eine Kohärenzlänge im Bereich 8 - 1mm auf. Reduziert man die Pulsleistung weiter und erhöht gleichzeitig die Pulsdauer, so lässt sich die Kohärenzlänge noch weiter vergrößern.

Es kann damit auch im Fall stark asymmetrischer Teil-Abtaststrahlengänge wie in den beiden oben erläuterten Beispielen eine Interferenz der beiden Teilstrahlenbündel sichergestellt werden, die nach der erfolgten zweiten Beugung und Vereinigung an der Maßverkörperung parallel in Richtung der Detektorelemente propagieren.

Ferner kann es die jeweilige Messaufgabe erfordern, ein gepulstes Abtastverfahren einzusetzen, wie es z.B. grundsätzlich aus der EP 1 334 332 B2 bekannt ist. Auf diese Art und Weise ist der Abtastzeitpunkt allein durch den Lichtpuls bestimmt, d.h. der bereits oben erwähnte Einspeicherjitter und die daraus resultierende Messungenauigkeit bei der Positionsbestimmung lässt sich bei gepulsten Abtastverfahren vermeiden bzw. zumindest minimieren.

Der für die Lichtquelle 21 vorgesehene Halbleiterlaser 21.2 ist vorzugsweise als Fabry-Perot-Laser ausgebildet, der - wie in Figur 3 schematisiert angedeutet - in einem geeigneten Lasergehäuse 21.1 angeordnet ist. Der Fabry-Perot-Laser 21.2 besteht hierbei aus dem eigentlichen Laser-Medium in Form eines geeigneten Halbleitermaterials sowie einer hochreflektierend ausgebildete Endfacette 21.3 (R ≈ 99%) und einer entspiegelten Front-Facette 21.4 (R ≈ < 0.1%); die beiden Endflächen bzw. Facetten des Fabry-Perot-Lasers 21.2 bilden somit einen Fabry-Perot-Resonator aus und bewirken die Anregung mehrerer möglicher Lasermoden. Die vom Fabry-Perot-Laser 21.2 emittierte Laser-Strahlung wird über eine der auskoppelseitigen Front-Facette 21.4 vorgeordnete Einkoppeloptik 21.5 in einen Lichtwellenleiter 21.8 eingekoppelt. Im Lichtwellenleiter 21.8 ist ein Reflexions-Bragg-Gitter 21.9 integriert, das lediglich in einem bestimmten Wellenlängenbereich Strahlung in Richtung des Fabry-Perot-Lasers 21.2 zurückreflektiert. Zu den oben erwähnten Fasergitter-Rückkopplungsmitteln auf Seiten der Lichtquelle 21 gehören demzufolge die Einkoppeloptik 21.5, der Lichtwellenleiter 21.8 sowie das Reflexions-Bragg-Gitter 21.9. Über den Lichtwellenleiter 28 wird die von der Lichtquelle 21 erzeugte Strahlung der Abtasteinheit der erfindungsgemäßen Positionsmesseirnichtung zugeführt, wie dies auch schon in Figur 1 angedeutet wurde.

Die Lichtquelle 21 umfasst somit zwei gekoppelte Laser-Resonatoren, nämlich einen internen sowie einen externen Laser-Resonator. Der interne Laser-Resonator bzw. Fabry-Perot-Resonator wird durch die End-Facette 21.3 und die Front-Facette 21.4 ausgebildet, der externe Laser-Resonator durch die End-Facette 21.3 und das Reflexions-Bragg-Gitter 21.9.

Das Reflexions-Bragg-Gitter 21.9 ist dergestalt ausgebildet, dass es lediglich in einem schmalen Wellenlängenbereich Strahlung zum Fabry-Perot-Laser 21.2 zurückreflektiert. Die wellenlängenmäßige Reflexions-Charakteristik des Reflexions-Bragg-Gitters 21.9 und damit der Fasergitter-Rückkopplungsmittel ist hierbei auf den Modenabstand des Fabry-Perot-Lasers 21.2 abgestimmt. So ist darüber sichergestellt, dass lediglich Strahlung von den Fasergitter-Rückkopplungsmitteln in den Fabry-Perot-Laser 21.2 zurückreflektiert wird, die in einem Wellenlängenbereich liegt, der kleiner ist als der Abstand benachbarter Moden des Fabry-Perot-Lasers 21.2. Dieser Zusammenhang soll anhand von Figur 4 veranschaulicht werden. Dort ist über einen bestimmten Wellenlängenbereich das resultierende Modenspektrum des verwendeten Fabry-Perot-Lasers 21.2 sowie die Reflexionscharakteristik bzw. die Reflexions-Bandbreite des Reflexions-Bragg-Gitters 21.9 stark schematisiert dargestellt.

Aufgrund dieser Abstimmung der Reflexions-Charakteristik des Reflexions-Bragg-Gitters 21.9 auf den Modenabstand des Fabry-Perot-Lasers 21.2 kann die Lichtquelle der erfindungsgemäßen Positionsmesseinrichtung derart gepulst betrieben werden, dass eine Positionsmessung mit lediglich geringem Phasenrauschen möglich ist.

Über das Reflexions-Bragg-Gitter 21.9 wird der interne Laser-Resonator stets auf einen Betrieb in einer festen Laser-Mode gezwungen, die innerhalb weniger Nanosekunden stabil vorliegt. Die Lichtquelle arbeitet hierbei im Single-Mode-Betrieb. Aufgrund der gewählten Reflexionscharakteristik bzw. der Reflexions-Bandbreite des Reflexions-Bragg-Gitters 21.9 im Bereich weniger Pikometer emittiert die Lichtquelle 21 der erfindungsgemäßen Positionsmesseinrichtung so in einem sehr schmalen Spektralbereich (Spektrale Breite 100pm bei einer emittierten Wellenlänge von 1µm und einer Kohärenzlänge von 10mm), d.h. die Kohärenzlänge der Lichtquelle 21 ist demzufolge - wie für die vorliegende Abwendung gewünscht - relativ groß. Es lassen sich auf diese Art und Weise - wie bereits oben erwähnt - Kohärenzlängen von mehr als 10mm erreichen.

Wie ebenfalls vorab bereits erwähnt, ist für eine hochpräzise Positionsmessung mit Messgenauigkeiten im Nanometer-Bereich erforderlich, dass lediglich ein geringes Phasenrauschen vorliegt. Andernfalls würde das vorhandene Phasenrauschen in ein Positionsrauschen übersetzt und damit die Genauigkeit der Positionsmessung unerwünscht beeinträchtigt. Über das Reflexions-Bragg-Gitter 21.9 und dessen Reflexions-Charakteristik lassen sich nunmehr gezielt Betriebszustände des Halbleiterlasers auswählen, die nicht einer Eigenmode des freilaufenden Halbleiterlasers ohne Reflexions-Bragg-Gitter 21.9 entsprechen. In diesen Eigenmoden würde ein hohes Phasenrauschen vorliegen; in Figur 4 ist ein derartiger - suboptimaler - Bereich 2 schraffiert markiert. Das Phasenrauschen lässt sich jedoch gezielt verringern, wenn eine Eigenmode des freilaufenden Halbleiterlasers mit Hilfe des Reflexions-Bragg-Gitters 21.9 gezielt herausgeschnitten wird, wie dies im schraffiert markierten Bereich 1 in Figur 4 angedeutet ist. Über das Reflexions-Bragg-Gitter 21.9 wird der Halbleiter-Laser somit in einen Single-Mode-Betrieb gezwungen. Entscheidend für die Anwendung in der erfindungsgemäßen Positionsmesseinrichtung ist demzufolge, dass die wellenlängenmäßige Lage der Lasermoden des verwendeten Halbleiterlasers gezielt auf das Reflexionsmaximum des Reflexions-Bragg-Gitters 21.9 abgestimmt wird. Aufgrund der Temperaturabhängigkeit der wellenlängenmäßigen Lage der Lasermoden als auch der Reflexionscharakteristik des Reflexions-Bragg-Gitters 21.9 erfolgt diese Abstimmung mit Hilfe von Temperatur-Einstellmitteln 21.6, 21.7, mit denen der Halbleiterlaser 21.2 und/oder die Fasergitter-Rückkopplungsmittel gekoppelt sind bzw. in Verbindung stehen. In Figur 3 sind diese Temperatur-Einstellmittel 21.6, 21.7 lediglich stark schematisiert angedeutet, wobei im dargestellten Beispiel sowohl dem Halbleiterlaser 21.2 als auch den Fasergitter-Rückkopplungsmitteln ein Temperatur-Einstellmittel 21.6, 21.7 in Wirkverbindung zugeordnet ist. Auf Seiten der Fasergitter-Rückkopplungsmittel müssen die vorgesehenen Temperatur-Einstellmittel 21.6, 21.7 hierbei zumindest auf das Reflexions-Bragg-Gitter 21.9 einwirken, um insbesondere dessen Reflexionscharakteristik geeignet abzustimmen.

Die Temperatur-Einstellmittel 21.6, 21.7 umfassen im vorliegenden Beispiel jeweils ein Temperierelement 21.6a, 21.7a, ausgebildet als Peltier-Element sowie eine Temperatur-Regelungseinrichtung 21.6b, 21.7b, die in bekannter Art und Weise soft- und/oder hardwaremäßig ausgebildet sein kann.

Die Temperier-Elemente 21.6, 21.7 können alternativ hierzu auch als Heizelemente, z.B. in Form einer Heizfolie, oder als regelbare Wasserkühlung oder Wasserheizung ausgebildet werden. Desweiteren könnte auch vorgesehen werden die beiden Temperier-Elemente 21.6a, 21.7a mittels einer einzigen Temperatur-Regelungseinrichtung geeignet gezielt einzustellen oder aber ein einziges, gemeinsam genutztes Temperier-Element vorzusehen, das über eine Temperatur-Regelungseinrichtung geeignet eingestellt wird.

In einer möglichen Ausführungsform wird etwa die Temperatur des Halbleiterlasers über ein geeignetes Temperier-Element im Bereich zwischen 20°C und 40°C mit einer Stabilität von 25mK eingestellt, wozu in der Regel ein Heizen des Halbleiterlasers nötig ist. Die Temperatur des Reflexions-Bragg-Gitter 21.9 wird auf ca. 22°C eingestellt, was etwa über ein Temperier-Element in Form einer geeigneten Wasserkühlung erfolgt.

Vor dem eigentlichen Messbetrieb der erfindungsgemäßen Positionsmesseinrichtung ist es erforderlich, den optimalen Arbeitspunkt der Lichtquelle 21 bzw. des Halbleiterlasers einzustellen, an dem das Phasenrauschen minimiert ist. Hierzu stehen verschiedene Vorgehensweisen zur Verfügung.

In einer ersten Variante ist vorgesehen, über die Temperatur-Einstellmittel 21.7 die Temperatur der Fasergitter-Rückkopplungsmittel mit einer vorgegebenen Stabilität konstant zu halten. Über die Temperatur-Einstellmittel 21.6 wird die Temperatur des Halbleiterlasers variiert und gleichzeitig das dabei resultierende Phasenrauschen gemessen. Aus den Messwerten wird dann das Phasenrausch-Minimum und die zugehörige, erforderliche Temperatur für den Halbleiterlaser ermittelt. Aufgrund der um einen Faktor 10 unterschiedlichen Temperaturkoeffizienten von Halbleiterlaser und Fasergitter-Rückkopplungsmitteln bzgl. der Wellenlänge, muss bei diesem Vorgehen lediglich ein kleiner Temperaturbereich (1 - 2K) von einigen wenigen Kelvin untersucht werden, um den optimalen Arbeitspunkt einzustellen.

In einer zweiten Variante wird hingegen über die Temperatur-Einstellmittel 21.6 die Temperatur des Halbleiterlasers mit einer bestimmten Stabilität konstant gehalten und über die Temperatur-Einstellmittel 21.7 die Temperatur der Fasergitter-Rückkopplungsmittel variiert. Gleichzeitig wird wiederum das dabei resultierende Phasenrauschen gemessen und dessen Minimum bzw. die zugehörige Temperatur der Fasergitter-Rückkopplungsmittel bestimmt. In diesem Fall muss ein deutlich größerer Temperaturbereich untersucht werden als vorher, typischerweise 6 - 10 K.

Der in beiden Verfahren jeweils zu untersuchende Temperaturbereich hängt vor allem von der Länge des internen Laserresonators ab. Je länger dieser ist, umso enger liegen die Lasermoden beieinander und umso kleiner ist der zu untersuchende Temperaturbereich.

Nach der Vermessung der Phasenrausch-Minima wird der Halbleiterlaser zusammen mit den Fasergitter-Rückkopplungsmitteln auf das in der Vermessung als Optimum identifizierte Paar von Temperaturen geregelt. Die beschriebene Temperatur-Vermessung kann bei der Herstellung der erfindungsgemäßen Positionsmesseinrichtung, bei der Initialisierung der Maschine und/oder in regelmäßigen Kalibrierzyklen erfolgen.

Um das Phasenrausch-Minimum in einer Maschine auszumessen muss die dort eingesetzte Positionsmesseinrichtung zur Signalerzeugung und Auswertung verwendet werden. Da das Phasenrauschen gerade bei Positionsmesseinrichtungen mit asymmetrischem Strahlengang relevant ist, kann auf diese Art das Phasenrausch-Minimum auch elegant mit relativ einfachen Mitteln ermittelt werden. So bewegt man hierbei die Positionsmesseinrichtung mit asymmetrischem Strahlengang an den Rand ihres Toleranzbereiches, bei dem die Asymmetrie zwischen den Teilstrahlengängen maximal ist. In dieser Position ermittelt man nun das Positionsrauschen als Funktion der Temperaturen der Fasergitter-Rückkopplungsmittel oder des Halbleiter-Lasers. Das heißt, es wird wie oben erläutert, eine Temperatur variiert und die andere mit einer bestimmten Genauigkeit konstant gehalten. Aus den ermittelten Daten kann nun die optimale Betriebstemperatur für den Halbleiterlaser oder die Fasergitter-Rückkopplungsmittel bestimmt und an die Temperatur-Regelungseinrichtung(en) übermittelt werden.

Insbesondere aufgrund der verschiedenen Maßnahmen auf Seiten der Lichtquelle der erfindungsgemäßen Positionsmesseinrichtung resultieren demzufolge die bereits oben diskutierten Vorteile für eine hochpräzise Positionsmessung.

So ist man bei der Entwicklung von gepulst betriebenen Positionsmesseinrichtungen nicht mehr auf stark symmetrische Abtaststrahlengänge beschränkt, auch asymmetrische Abtaststrahlengänge sind nun möglich.

Zudem kann der größere zulässige Weglängenunterschied für die interferierenden Teilstrahlenbündel für einen erweiterten Toleranzbereich genutzt werden, da durch ein eventuelles Verkippen der von Maßverkörperung und Abtasteinheit der Positionsmesseinrichtung die beiden interferierenden Teilstrahlenbündel ebenfalls unterschiedlich optische Weglängen durchlaufen. Bei Verwendung der oben erwähnten Lichtquellen, bietet sich nun die Möglichkeit beim Einsatz interferentieller Positionsmesseinrichtungen z.B. größere Verkippungstoleranzen als bislang üblich zuzulassen.

Im Rahmen der vorliegenden Erfindung gibt es neben den erläuterten Beispielen selbstverständlich eine Reihe weiterer Ausführungsmöglichkeiten.

So können etwa im Fall gitterbasierter Positionsmesseinrichtungen auch alternative Abtaststrahlengänge vorgesehen werden, bevor die Teilstrahlenbündel aus den verschiedenen Teilstrahlengängen überlagert zur Interferenz gebracht werden.

Als Aufspaltmittel zur Aufspaltung des von der Lichtquelle gelieferten Lichtstrahls in mindestens zwei Teilstrahlenbündel können hierbei sowohl Gitter als auch andere optische Elemente im Strahlengang fungieren.

## Patentansprüche

1. Positionsmesseinrichtung zur Erfassung der Position zweier Objekte, die in mindestens einer Messrichtung zueinander beweglich angeordnet sind, mit
- einer Lichtquelle (21; 201), die als Halbleiterlaser (21.2) mit Fasergitter-Rückkopplungsmitteln (21.5, 21.8, 21.9) ausgebildet ist, wobei die Fasergitter-Rückkopplungsmittel hinsichtlich ihrer wellenlängenmäßigen Reflexionscharakteristik auf den Modenabstand des Halbleiterlasers abgestimmt sind,
- Aufspaltmitteln (202), über die eine Aufspaltung eines von der Lichtquelle (21; 201) gelieferten Lichtstrahls in zwei oder mehr Teilstrahlenbündel erfolgt,
- mindestens zwei Teilstrahlengängen, die von den Teilstrahlenbündeln durchlaufen werden und
- mehreren optoelektronischen Detektorelementen (27.1, 27.2, 27.3, 207.A, 207.B), auf denen interferierende Teilstrahlenbündel aus den Teilstrahlengängen auftreffen, so dass über die Detektorelemente (27.1, 27.2, 27.3, 207.A, 207.B) verschiebungsabhängige Positionssignale erfassbar sind und wobei
- der Halbleiterlaser und/oder die Fasergitter-Rückkopplungsmittel zumindest teilweise mit Temperatur-Einstellmitteln (21.6, 21.7) gekoppelt sind, über die die Abstimmung der Reflexionscharakteristik der Fasergitter-Rückkopplungsmittel auf die Lage der Moden des Halbleiterlasers erfolgt, und wobei
- die Teil-Strahlengänge asymmetrisch mit unterschiedlichen optischen Weglängen ausgebildet sind, die von Teilstrahlenbündeln durchlaufen werden, bevor die Teilstrahlenbündel überlagert zur Interferenz kommen und wobei
- die Positionsmesseinrichtung ein Gitter als körperlich ausgebildete Maßverkörperung (10) umfasst, welches im Abtaststrahlengang angeordnet ist und von den Teilstrahlenbündeln beaufschlagt wird.

2. Positionsmesseinrichtung nach Anspruch 1, wobei der Halbleiterlaser als Fabry-Perot-Laser (21.2) ausgebildet ist.

3. Positionsmesseinrichtung nach Anspruch 1, wobei die Fasergitter-Rückkopplungsmittel folgende Komponenten umfassen:
- eine, der auskoppelseitigen Front-Facette (21.4) des Halbleiter-Lasers vorgeordnete Einkoppeloptik (21.5),
- einen der Einkoppeloptik (21.5) nachgeordneten Lichtwellenleiter (21.8),
- ein im Lichtwellenleiter (21.8) integriertes Reflexions-Bragg-Gitter (21.9).

4. Positionsmesseinrichtung nach Anspruch 1, wobei Strahlung von den Fasergitter-Rückkopplungsmitteln in den Halbleiterlaser zurückreflektierte Strahlung wird, die in einem Wellenlängenbereich liegt, der kleiner gewählt ist als der Abstand benachbarter Moden des Halbleiterlasers.

5. Positionsmesseinrichtung nach mindestens einem der vorhergehenden Ansprüche, wobei der Halbleiterlaser und die Fasergitter-Rückkopplungsmittel zumindest teilweise mit Temperatur-Einstellmitteln (21.6, 21.7) gekoppelt sind, über die der Halbleiterlaser und die Fasergitter-Rückkopplungsmittel bei Temperaturen betreibbar sind, in denen das Phasenrauschen der verschiebungsabhängigen Positionssignale minimiert ist.

6. Positionsmesseinrichtung nach Anspruch 5, wobei die Temperatur-Einstellmittel (21.6, 21.7) ein Temperier-Element (21.6a, 21.7a) sowie eine Temperatur-Regelungseinrichtung (21.6b, 21.7b) umfassen.

7. Positionsmesseinrichtung nach Anspruch 3, wobei der Lichtwellenleiter (21.8) als Single-Mode-Lichtwellenleiter ausgebildet ist.

8. Positionsmesseinrichtung nach mindestens einem der vorhergehenden Ansprüche, wobei der Halbleiterlaser eine Kohärenzlänge im Bereich von 8-12mm aufweist.

9. Positionsmesseinrichtung nach mindestens einem der vorhergehenden Ansprüche, wobei der Halbleiterlaser Lichtpulse mit Pulsdauern im Bereich von 20ns bis 200ns liefert.

## Claims

1. Position measuring device for acquiring the position of two objects arranged movably in relation to one another in at least one measurement direction, comprising
- a light source (21; 201) embodied as a semiconductor laser (21.2) with fibre grating feedback means (21.5, 21.8, 21.9), wherein the fibre grating feedback means arc tuned to the mode spacing of the semiconductor laser in respect of the reflection characteristic thereof relating to wavelength,
- splitting means (202), by means of which a light beam supplied by the light source (21; 201) is split into two or more partial beams,
- at least two partial beam paths, along which the partial beams pass, and
- a plurality of optoelectronic detector elements (27.1, 27.2, 27.3, 207.A, 207.B), on which interfering partial beams from the partial beam paths are incident such that displacement-dependent position signals are acquirable by way of the detector elements (27.1, 27.2, 27.3, 207.A, 207.B), and wherein
- the semiconductor laser and/or the fibre grating feedback means are at least partly coupled to temperature setting means (21.6, 21.7), by means of which the reflection characteristic of the fibre grating feedback means is tuned to the position of the modes of the semiconductor laser, and wherein
- the partial beam paths are embodied asymmetrically with different optical path lengths, along which partial beams pass, before the partial beams interfere in a superposed manner and wherein
- the position measuring device comprises a grating as a physically embodied measuring standard (10), which is arranged in the scanning beam path and impinged upon by the partial beams.

2. Position measuring device according to Claim 1, wherein the semiconductor laser is embodied as a Fabry-Perot laser (21.2).

3. Position measuring device according to Claim 1, wherein the fibre grating feedback means comprise the following components:
- a coupling-in optical unit (21.5) disposed in front of the decoupling-side front facet (21.4) of the semiconductor laser,
- an optical waveguide (21.8) disposed downstream of the coupling-in optical unit (21.5),
- a Bragg reflection grating (21.9) integrated into the optical waveguide (21.8).

4. Position measuring device according to Claim 1, wherein radiation from the fibre grating feedback means becomes radiation reflected back into the semiconductor laser, which radiation lies in a wavelength range that is selected to be smaller than the distance between adjacent modes of the semiconductor laser.

5. Position measuring device according to at least one of the preceding claims, wherein the semiconductor laser and the fibre grating feedback means are at least partly coupled to temperature setting means (21.6, 21.7), by means of which the semiconductor laser and the fibre grating feedback means are operable at temperatures at which the phase noise of the displacement-dependent position signals is minimized.

6. Position measuring device according to Claim 5, wherein the temperature setting means (21.6, 21.7) comprise a temperature-controlling element (21.6a, 21.7a) and a temperature regulation device (21.6b, 21.7b).

7. Position measuring device according to Claim 3, wherein the optical waveguide (21.8) is embodied as a single-mode optical waveguide.

8. Position measuring device according to at least one of the preceding claims, wherein the semiconductor laser has a coherence length in the range of 8-12 mm.

9. Position measuring device according to at least one of the preceding claims, wherein the semiconductor laser supplies light pulses with pulse durations in the range of 20 ns to 200 ns.

## Revendications

1. Dispositif de mesure de position destiné à détecter la position de deux objets qui sont disposés de manière mobile l'un par rapport à l'autre dans au moins une direction de mesure, comportant
- une source de lumière (21 ; 201) qui est réalisée sous la forme d'un laser à semi-conducteur (21.2) comportant des moyens de rétroaction à réseau de fibres (21.5, 21.8, 21.9), dans lequel les moyens de rétroaction à réseau de fibres sont adaptés à l'espacement de mode du laser à semi-conducteur du point de vue de leur caractéristique de réflexion en fonction de la longueur d'onde,
- des moyens de décomposition (202) par l'intermédiaire desquels est effectuée une décomposition d'un faisceau lumineux délivré par la source de lumière (21 ; 201) en deux faisceaux partiels ou plus,
- au moins deux chemins de faisceaux partiels qui sont parcourus par les faisceaux partiels et
- plusieurs éléments détecteurs optoélectroniques (27.1, 27.2, 27.3, 207.A, 207.B) sur lesquels sont incidents des faisceaux partiels interférant mutuellement de manière à ce que des signaux de position dépendant du déplacement puissent être détectés par l'intermédiaire des éléments détecteurs (27.1, 27.2, 27.3, 207.A, 207.B) et dans lequel
- le laser à semi-conducteur et/ou les moyens de rétroaction à réseau de fibres sont couplés au moins partiellement à des moyens de réglage de température (21.6, 21.7) au moyen desquels s'effectue l'adaptation de la caractéristique de réflexion des moyens de rétroaction à réseau de fibres à la position des modes du laser à semi-conducteur, et dans lequel
- les chemins de faisceaux partiels qui sont parcourus par les faisceaux partiels sont réalisés de manière asymétrique par rapport à différentes longueurs d'onde optiques avant que les faisceaux partiels viennent à se superposer de manière à interférer mutuellement, et dans lequel
- le dispositif de mesure de position comprend un réseau en tant que mesure matérialisée (10) réalisée physiquement, qui est disposé sur le chemin de faisceau de balayage et qui est exposé aux faisceaux partiels.

2. Dispositif de mesure de position selon la revendication 1, dans lequel le laser à semi-conducteur est réalisé sous la forme d'un laser Fabry-Pérot (21.2).

3. Dispositif de mesure de position selon la revendication 1, dans lequel les moyens de rétroaction à réseau de fibres comprennent les composants suivant :
- une optique de couplage en entrée (21.5) disposée en amont de la facette avant (21.4) côté couplage en sortie du laser à semi-conducteur,
- un guide d'ondes optique (21.8) disposé en aval de l'optique de couplage en entrée (21.5),
- un réseau de Bragg de réflexion (21.9) intégré au guide d'ondes optique (21.8).

4. Dispositif de mesure de position selon la revendication 1, dans lequel un rayonnement des moyens de rétroaction à réseau de fibres devient dans le laser à semi-conducteur un rayonnement rétro-réfléchi, qui se situe dans le domaine de longueurs d'onde sélectionné de manière à ce qu'il soit inférieur à l'espacement de modes voisins du laser à semi-conducteur.

5. Dispositif de mesure de position selon au moins l'une des revendications précédentes, dans lequel le laser à semi-conducteur et les moyens de rétroaction à réseau de fibres sont couplés au moins partiellement à des moyens de réglage de température (21.6, 21.7) par l'intermédiaire desquels le laser à semi-conducteur et les moyens de rétroaction à réseau de fibres peuvent être mis en fonctionnement à des températures auxquelles le bruit de phase des signaux de position dépendant du déplacement est minimisé.

6. Dispositif de mesure de position selon la revendication 5, dans lequel les moyens de réglage de température (21.6, 21.7) comprennent un élément d'équilibrage de température (21.6a, 21.7a) ainsi qu'un dispositif de régulation de température (21.6b, 21.7a).

7. Dispositif de mesure de position selon la revendication 3, dans lequel le guide d'ondes optique (21.8) est réalisé sous la forme d'un guide d'ondes optique monomode.

8. Dispositif de mesure de position selon au moins l'une des revendications précédentes, dans lequel le laser à semi-conducteur possède une longueur de cohérence se situant dans la gamme de 8-12 mm.

9. Dispositif de mesure de position selon au moins l'une des revendications précédentes, dans lequel le laser à semi-conducteur délivre des impulsions lumineuses ayant des durées d'impulsion se situant dans la gamme de 20 ns à 200 ns.
